# EUROPEAN PATENT APPLICATION

(11) **EP 3 556 265 A1**
(43) Date of publication of application: **23.10.2019**
(21) Application number: 18168193.3
(22) Date of filing: 19.04.2018
(51) Int. Cl.: A47J 27/08

(54) **COOKING APPLIANCE AND METHOD FOR COOKING GRAIN FOODS**

(71) Applicant: Koninklijke Philips N.V., 5656 AE Eindhoven (NL)
(72) Inventor: SU, Guangming, 5656 AE Eindhoven (NL); WIJNOLTZ, Anna Louise, 5656 AE Eindhoven (NL); YU, Donghai, 5656 AE Eindhoven (NL)
(74) Representative: de Haan, Poul Erik

(57) **Abstract**

The invention provides a cooking appliance and a method for cooking grain foods. The method comprises: heating up the mixture of the grain foods and water to a first temperature lower than starch gelatinization temperature; maintaining the mixture for a first time while implementing one or multiple cycles of dynamic pressure treatment to the mixture for a second time which is no greater than the first time; heating up the mixture to a second temperature indicative of the starch gelatinization temperature and maintaining it to the second temperature for a third time for starch gelatinization; cooling down the starch gelatinized grain foods to a third temperature; wherein the dynamic pressure treatment comprises lowering down the pressure of the space in which the mixture of the grain foods and water accommodates to a level that is lower than the corresponding pressure level of water boiling pressure for the first temperature.

## Description

### FIELD OF THE INVENTION

The invention relates to the technical field of food cooking, and in particular it relates to a cooking appliance and a method for cooking grain foods.

### BACKGROUND OF THE INVENTION

Grain food, e.g. rice, is a popular staple food in Asia, and is increasingly popular worldwide. In recent years, due to health benefits, whole grain (e.g. brown rice, black bean, etc.) is recommended as daily intake. However, whole grain is not easy to cook for achieving a well-acceptable sensory attributes. Slow hydration is considered as one of the most important issues in cooking grain foods, especially in cooking whole grain foods.

Dynamic pressure (DP) treatment is a very recent technology to treat food materials. It involves at least one cycle of quick pressure change when treating food including thermal or non-thermal methods, pressure within cooking chamber features a de-pressure process followed with a sharp recovery.

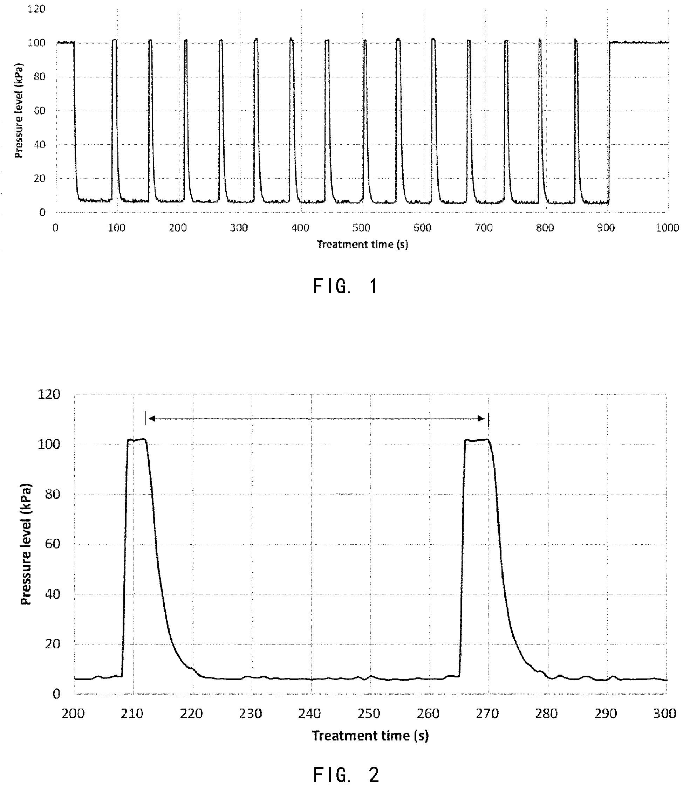

Fig. 1 and Fig. 2 schematically show two general process of dynamic pressure treatment in the prior art including the pressure profile for 15 cycles and 1 cycle respectively. As shown in Fig. 1 and Fig. 2, a general process of DP treatment includes several steps: 1) prepare materials, 2) seal the food container, 3) vacuum the container and keep it under vacuum status for some time, 4) break the vacuum status of container quickly, 5) if necessary, repeat the previous steps 3 and 4 as required, 6) complete DP treatment, and enter into next steps of food processing.

During DP process, pressure change can introduce several effects on treated materials: 1) Vacuum effect, 2) 0-0.1 MPa pressure (force) effect, 3) shear force and mixing effects due to quick vacuum breakdown.

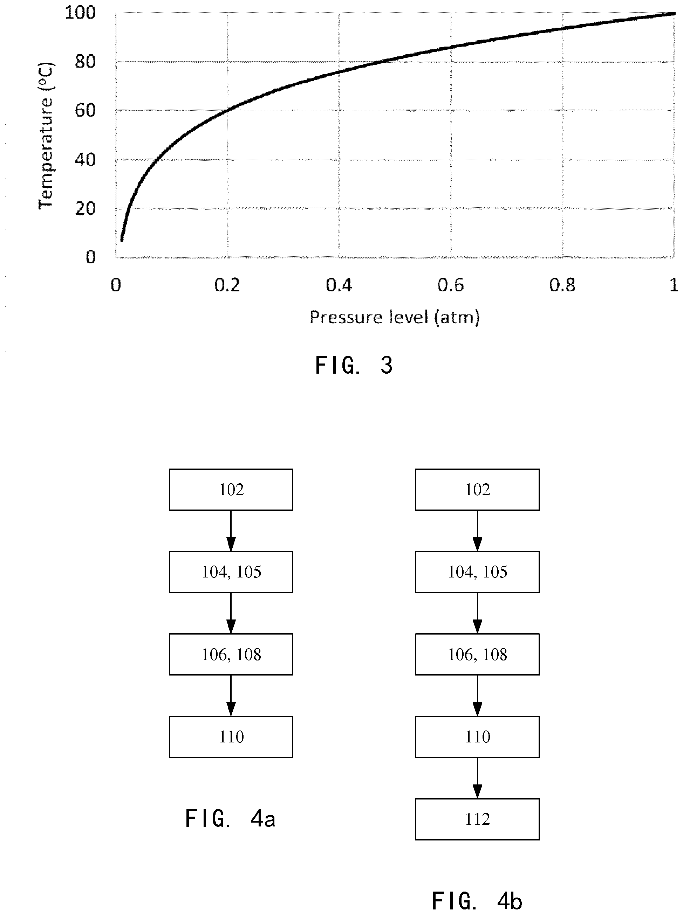

Fig. 3 schematically shows the curve relationship between water boiling temperature and vacuum level in the prior art. Based on empirical values, each vacuum level corresponds to determined boiling temperature. e. g. the boiling temperature of water at 0.01, 0.03, 0.2 and 1 atm are 6.97, 24.08, 60.06 and 99.61 °C, respectively.

Toshiba patent - JP2015058108 (A) - claimed a pressure control unit to realize DP treatment in rice cooking process, with the purpose of increasing rice hydration and improving rice sensory qualities. While the pressure level is higher than boiling pressure to avoid boiling effects. However, in this invention, one of the claims is the lower pressure level to generate boiling effect for better hydration effect.

There are some problems or disadvantages existing in the prior arts and are seeking to be overcome by the present invention:

### 1. Slow hydration rate in current cooking process

Hydration of starch is one of the most important steps in rice cooking, and is considered as the rate-limiting step in whole rice cooking process. The slow hydration of starch in rice are results from: (1) the compact structure of starch granule, (2) air on the food surface cause a low surface tension, and water cannot wet a low surface tension surface, (3) air bubbles that are trapped in rice pores are even more difficult to be replaced by water in ambient soaking.

### 2. Uneven heating for cooked rice texture qualities

Even heating during rice cooking can deliver a better textural qualities of cooked rice. Most current rice cooking methods or rice cookers have two disadvantages: (1) remain the air in rice during soaking and following cooking processes, since the heat transfer efficiency of air is much lower than water, therefore, the presence of air causes uneven heating of the whole rice, resulting in relatively lower texture qualities of cooked rice; (2) have limited agitating effect, which also impact the even heating during heating and result in similar issue.

### 3. Being harmful for vacuum pump

For DP treatment with vacuum level lower than boiling pressure, water evaporates to steam, and be removed by vacuum pump, while high moisture in air could be harmful to vacuum pump.

### 4. Unbalance of rice-water ratio

For DP treatment with vacuum level lower than boiling pressure, water evaporates to steam, and be removed by vacuum pump, this changes the ratio of rice to water in cooking chamber, and will affect the cooking quality of final products.

### SUMMARY OF THE INVENTION

The present invention intends to solve at least one technical problems above mentioned by providing a cooking appliance and a method for cooking grain foods as follows.

In order to solve the aforementioned technical problem(s), the present invention provides a method for cooking grain foods, comprising:
heating up the mixture of the grain foods and water to a first target temperature which is lower than a starch gelatinization temperature of the grain foods;
maintaining the mixture of the grain foods and water to the first target temperature for a first determined time period while implementing one or multiple cycles of dynamic pressure treatment to the mixture of the grain foods and water for a second determined time period which is no greater than the first determined time period;
heating up the mixture of the grain foods and water to a second target temperature indicative of the starch gelatinization temperature and maintaining it to the second target temperature for a third determined time period for starch gelatinization of the grain foods; and
cooling down the starch gelatinized grain foods to a third target temperature for acceptable serving;
wherein the dynamic pressure treatment comprises lowering down the pressure of the space in which the mixture of the grain foods and water accommodates to a level that is lower than the corresponding pressure level of water boiling pressure for the first target temperature.

In one embodiment of the present invention, optionally, time for each cycle of dynamic pressure treatment within the second determined time period ranges from 10 to 60s.

In one embodiment of the present invention, optionally, for each cycle of dynamic pressure treatment, besides the lowering down of the pressure of the accommodating space as vacuuming, it further comprises vacuum degree maintaining, pressure recovering in 1 to 5s and ambient pressure maintaining orderly.

In one embodiment of the present invention, optionally, the first determined time period is divided into at least two determined time segments;
in one determined time segment, at least one of the following item is distinguished from the one in other determined time segment:
the time for lowering down the pressure of the accommodating space;
the time for maintaining the reached vacuum degree in the accommodating space;
the time for recovering the pressure of the accommodating space back to the ambient pressure; and
the time for maintaining the ambient pressure in the accommodating space.

In one embodiment of the present invention, optionally, the first target temperature ranges from 30 to 75 °C depending on different grain foods.

In one embodiment of the present invention, optionally, the second target temperature ranges from 95 to 100 °C depending on different grain foods.

In one embodiment of the present invention, optionally, the third target temperature ranges from 40 to 60 °C.

In one embodiment of the present invention, optionally, the method further comprises lowering down the pressure of the accommodating space concurrently while cooling down the starch gelatinized grain foods to the third target temperature.

In one embodiment of the present invention, optionally, the manners of cooling down the starch gelatinized grain foods comprise natural cooling and vacuuming cooling.

In order to solve the aforementioned technical problem(s), the present invention also provides a cooking appliance for cooking grain foods, comprising:
a sealable cooking chamber, for accommodating the mixture of the grain foods and water therein;
a heater, coupled to the sealable cooking chamber, for heating up and maintaining the mixture of the grain foods and water to a first target temperature which is lower than a starch gelatinization temperature of the grain foods and to a second target temperature which is indicative of the starch gelatinization temperature of the grain foods respectively;
a vacuum pump, coupled to the sealable cooking chamber, for implementing one or multiple cycles of dynamic pressure treatment to the mixture of the grain foods and water; and
a control unit, coupled to the sealable cooking chamber, the heater and the vacuum pump, for controlling the heater and the vacuum pump to create necessary cooking temperatures and cooking pressures duly within the sealable cooking chamber;
wherein the control unit is configured to implement the dynamic pressure treatment during which comprises controlling the vacuum pump to lower down the pressure within the sealable cooking chamber to a level that is lower than the corresponding pressure level of water boiling pressure for the first target temperature.

In one embodiment of the present invention, optionally, the cooking appliance further comprises a moisture trapper, coupled to the sealable cooking chamber and the vacuum pump, for trapping the gaseous phase of water evaporated from the liquid phase of water accommodated in the sealable cooking chamber because of being heated before reaching the vacuum pump and condensing the gaseous phase of water back to the liquid phase of water which is collected in a collector unit located at the bottom of the moisture trapper.

In one embodiment of the present invention, optionally, the collector unit is connected to the sealable cooking chamber and guiding the water collected back to the sealable cooking chamber in real time.

In one embodiment of the present invention, optionally, the cooking appliance is a rice cooker, electric pressure cooker or multi-cooker.

In order to solve the aforementioned technical problem(s), the present invention further provides a computer readable storage medium, having computer readable program instructions embodied therewith for, when executed on the control unit of any of the cooking appliance aforementioned, causing the control unit to implement any of the methods aforementioned.

In order to solve the aforementioned technical problem(s), the present invention still further provides a computer program product, comprising a computer readable storage medium having computer readable program instructions embodied therewith for, when executed on the control unit of any of the cooking appliance aforementioned, causing the control unit to implement any of the methods aforementioned.

As compared with the prior arts, the present invention has overcome the technical problem(s) mentioned in the background of the invention, and has the following technical benefits and characteristics:

### 1. Quick hydration rate in the proposed cooking process

In this invention, low pressure will cause the air bubbles to release from rice, and pressure release will increase water absorption extent due to pressure-pushing the water to replace (air bubble) spaces and enter into rice granule. Low pressure dynamic treatment will add the kinetic effect to faster release the air from the food to be replaced by water.

Lower pressure has better effect, and the pressure used in this invention is much lower than existing products and cooking process.

### 2. Even heating that is important for cooked rice texture qualities

In this invention, DP is used to remove air and replace with water to increase heating evenness during cooking process, what's more, the applied vacuum level is lower than boiling pressure to generate agitating effect for an additional even heating.

### 3. Being non-harmful for vacuum pump

In this invention, the moisture trapper can separate and trap water from removed air, therefore, it is not harmful for vacuuming, and contributes to device service life.

### 4. Balanced of rice-water ratio

In this invention, the moisture trapper can separate and trap water from removed air, and then, the trapped water will be send back to cooking chamber to maintain the rice to water ratio. Therefore, quality of cooked rice can be guaranteed.

In a word, the present invention provides a method and an appliance for cooking grain foods for improving cooking process.

Dynamic pressure is applied to speed up the process of hydrating before starch gelatinizing, the benefits of this invention is to shorten the normal cooking time while providing better texture attributes of cooked foods.

This invention can be incorporated into kitchen appliance products, such as rice cooker, (electric) pressure cooker, multi-cooker, and etc.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically shows one general process of dynamic pressure treatment in the prior art including the pressure profile for 15 cycles;
Fig. 2 schematically shows another general process of dynamic pressure treatment in the prior art including the pressure profile for 1 cycle;
Fig. 3 schematically shows the curve relationship between water boiling temperature and vacuum level in the prior art;
Fig. 4a and Fig. 4b schematically show the flow charts of implementing the methods for cooking grain foods according to two embodiments of the present invention;

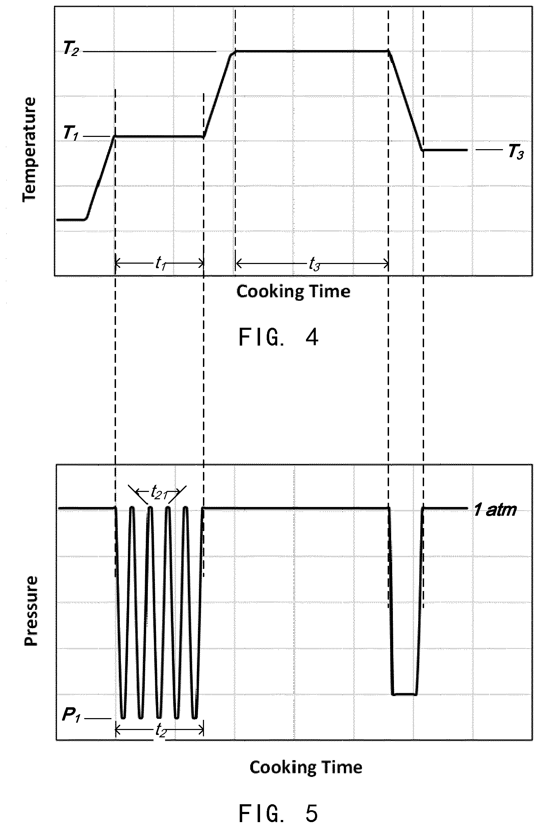

Fig. 4 schematically shows one typical cooking temperature profile for a rice cooking process according to one embodiment of the present invention;
Fig. 5 schematically shows the corresponding typical cooking pressure profile for the rice cooking process according to the embodiment of Fig. 4 of the present invention;

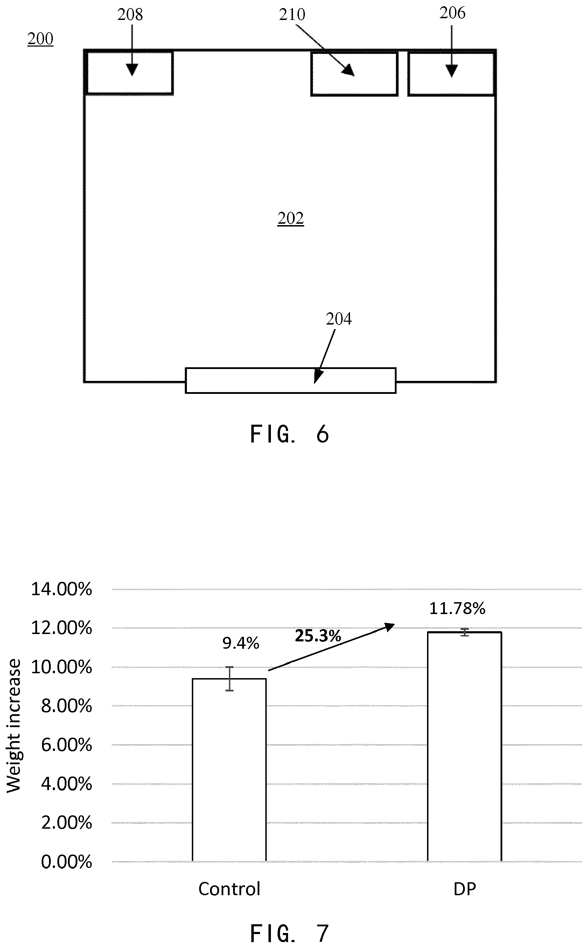

Fig. 6 schematically shows the cooking appliance that can implement the method for cooking grain foods according to one embodiment of the present invention;
Fig. 7 schematically shows the hydration improvement of brown rice after DP soaking according to one embodiment of the present invention as compared with non-DP soaking in the prior art;

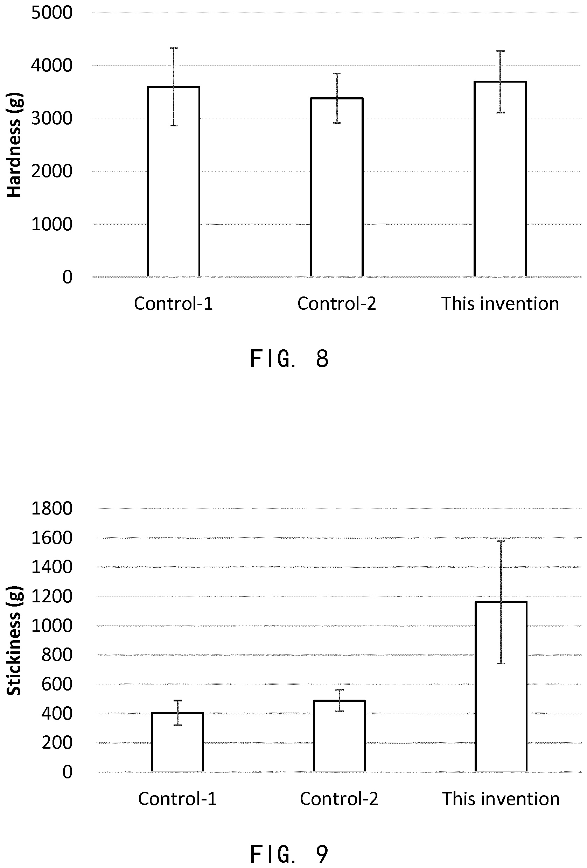

Fig. 8 schematically shows the hardness improvement of cooked brown rice after DP soaking according to one embodiment of the present invention as compared with non-DP soaking in the prior art;
Fig. 9 schematically shows the stickiness improvement of cooked brown rice after DP soaking according to one embodiment of the present invention as compared with non-DP soaking in the prior art;

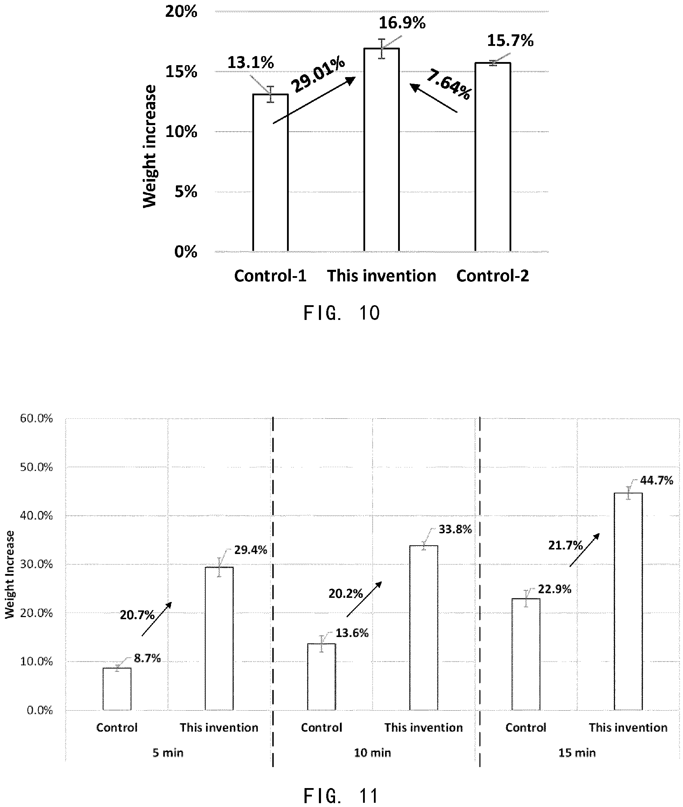

Fig. 10 schematically shows the hydration improvement of white rice after DP soaking according to one embodiment of the present invention as compared with non-DP soaking in the prior art; and
Fig. 11 schematically shows the hydration improvement of black bean after DP soaking according to one embodiment of the present invention as compared with non-DP soaking in the prior art under three experimental groups made based on different treatment time periods.

### DETAILED DESCRIPTION OF THE EMBODIMENTS

Fig. 4a and Fig. 4b schematically show the flow charts of implementing the methods for cooking grain foods according to two embodiments of the present invention. The grain foods can be brown rice, white rice or black bean. Fig. 4 and Fig. 5 schematically show one typical cooking temperature and pressure profiles for a rice cooking process according to one embodiment of the present invention. Please refer to Fig. 4a first and Fig. 4 as well as Fig. 5 if necessary, the method 100 for cooking grain foods mainly comprises the following steps:
1) heating 102 up the mixture of the grain foods and water to a first target temperature T1 which is slightly lower than a starch gelatinization temperature of the grain foods, to speed up the hydration process. Depending on different grain foods, the first target temperature T1 ranges from 30 to 75 °C;
2) maintaining 104 the mixture of the grain foods and water to the first target temperature T1 for a first determined time period t1 while turning on vacuum pump for implementing 105 one or multiple cycles of dynamic pressure (DP) treatment to the mixture of the grain foods and water for a second determined time period t2 which is no greater than the first determined time period t1;
3) heating 106 up the mixture of the grain foods and water from the first target temperature T1 to a second target temperature T2 indicative of the starch gelatinization temperature to gelatinize rice starch and maintaining 108 it to the second target temperature T2 for a third determined time period t3 for starch gelatinization of the grain foods; the second target temperature T2 ranges from 95 to 100 °C depending on different grain foods;
4) cooling 110 down the starch gelatinized grain foods to a lower third target temperature T3 for reaching acceptable serving; the third target temperature T3 ranges from 40 to 60 °C; the manners of temperature cooling 110 down the starch gelatinized grain foods could be: 1) natural cooling, and/or 2) vacuum cooling;
wherein the dynamic pressure treatment comprises lowering down the pressure P1 of the space in which the mixture of the grain foods and water accommodates to a level that is lower than the corresponding pressure level of water boiling pressure P0 for the first target temperature T1.

In one embodiment of the present invention, this DP treatment in the above step 2 can be further featured with:
a. the time t21 for each cycle of dynamic pressure treatment within the second determined time period t2 ranges from 10 to 60s;
b. for each cycle of dynamic pressure treatment, besides the lowering down of the pressure P1 of the accommodating space as vacuuming, it further comprises vacuum degree maintaining, pressure recovering in e.g. 1 to 5s and ambient pressure maintaining orderly. This time distribution for the rest steps can be any types.

Particularly speaking, the first determined time period t1 can be divided into at least two determined time segments. In one determined time segment, at least one of the following item is distinguished from the one in other determined time segment:
the time for lowering down the pressure P1 of the accommodating space;
the time for maintaining the reached vacuum degree in the accommodating space;
the time for recovering the pressure P1 of the accommodating space back to the ambient pressure; and
the time for maintaining the ambient pressure in the accommodating space.

Please then refer to Fig. 4b and Fig. 4 as well as Fig. 5 if necessary, in one embodiment of the present invention, the method 100 may further comprise lowering 112 down the pressure P1 of the accommodating space concurrently while cooling 110 down the starch gelatinized grain foods to the third target temperature T3, just as shown in Fig. 5.

Fig. 6 schematically shows the cooking appliance that can implement the method for cooking grain foods according to one embodiment of the present invention. As shown in Fig. 6 as well as Fig. 4 and Fig. 5, the cooking appliance 200 for cooking grain foods mainly comprises these components of relative devices (e.g. a rice cooker): a sealable cooking chamber 202, a heater 204, a vacuum pump 206, and a control unit 208.

Wherein, the sealable cooking chamber 202 is applied for accommodating the mixture of the grain foods and water therein. The heater 204 which is coupled to the sealable cooking chamber 202 is applied for heating up and maintaining the mixture of the grain foods and water to a first target temperature T1 which is lower than a starch gelatinization temperature of the grain foods and to a second target temperature T2 which is indicative of the starch gelatinization temperature of the grain foods respectively. The vacuum pump 206 which is coupled to the sealable cooking chamber 202 is applied for implementing one or multiple cycles of dynamic pressure treatment to the mixture of the grain foods and water. The control unit 208 which is coupled to the sealable cooking chamber 202, the heater 204 and the vacuum pump 206 is applied for controlling the heater 204 and the vacuum pump 206 to create necessary cooking temperatures and cooking pressures duly within the sealable cooking chamber 202.

In the embodiment of the present invention, the control unit 208 is configured to implement the dynamic pressure treatment during which comprises controlling the vacuum pump 206 to lower down the pressure P1 within the sealable cooking chamber 202 to a level that is lower than the corresponding pressure level of water boiling pressure P0 for the first target temperature T 1.

In one embodiment of the present invention, preferably, cooking appliance 200 may further comprise a moisture trapper 210, which is coupled to the sealable cooking chamber 202 and the vacuum pump 206. The moisture trapper 210 can be applied for trapping the gaseous phase of water evaporated from the liquid phase of water that is accommodated in the sealable cooking chamber 202 because of being heated before reaching the vacuum pump 206 and condensing the gaseous phase of water back to the liquid phase of water which is collected in a collector unit located at the bottom of the moisture trapper 210. In this regard, the collector unit can connect to the sealable cooking chamber 202 and guide the water collected back to the sealable cooking chamber 202 in real time.

In other words, the moisture trapper 210 is an important component in this cooking appliance 200. During DP treatment, Pressure P1 is lower than water boiling pressure (P0), boiling is generated, therefore, much water is changed from liquid phase to gaseous phase. Moisture trapper 210's function is to transfer gaseous phase of water back to liquid phase, then collect all liquid water at the bottom unit. The collected condensed water will be directed back to sealable cooking chamber 202. Any current available moisture trappers 210 with same function are also accepted in this present invention.

More detailed description of how to build and use the invention can be illustrated as follows:

### Embodiment 1: to improve sensory quality of cooked whole grain foods, e.g. brown rice

In order to evaluate the application of this invention in brown rice cooking, hydration of brown rice just after DP treatment and the textural qualities of cooked brown rice are evaluated.

### Hydration:

Weight increase after DP treatment is evaluated to compare the effects of this invention and control (non-DP) as a contrast. Fig. 7 schematically shows the hydration improvement of brown rice after DP soaking according to one embodiment of the present invention as compared with non-DP soaking in the prior art. The experimental results of hydration in the condition of: *T*₁ at 50 °C, *t*₁ at 15 min.

### Control: only soaking without DP treatment

This invention: soaking with DP treatment, vacuum level at 10∼13 kPa which is lower (at 50 °C) than boiling pressure. 0.5 min for each cycle which includes 25 s vacuuming (fast pressure decreasing ∼10 s and low pressure maintaining ∼15 s) and 5 s vacuum breaking (pressure back to 1 atm and at 1 atm)

Results: DP treatment with pressure lower than boiling pressure can significantly increase brown rice hydration effect.

### Textural qualities of cooked brown rice:

Hardness and stickiness of cooked brown rice were evaluated to compare products cooked with this invention and normal cooking method. Fig. 8 and Fig. 9 schematically show the hardness and stickiness improvements of cooked brown rice after DP soaking according to one embodiment of the present invention as compared with non-DP soaking in the prior art respectively. So Fig. 8 and Fig. 9 show the experimental results of hydration in the methods of that described in below:
Control-1: weigh 200 g brown rice and 400 g water, use Philips X6 rice cooker to cook brown rice for 45 min.
Control-2: soaking with DP treatment, vacuum level at 6∼7 kPa which is higher (at 25 °C) than boiling pressure (∼3 kPa at 25 °C).

Total DP time is 15 min, each cycle is 1 min, and process condition for each cycle is: 55 s vacuuming (fast pressure decreasing ∼10 s and low pressure maintaining -45 s) and 5 s vacuum breaking (pressure back to 1 atm and at 1 atm). Followed by cooking process, which is similar as control -1 cooking process in Philips X6.

This invention: soaking with DP treatment, *T₁* at 50 °C, *t*₁ at 15 min, vacuum level at 10∼13 kPa which is lower than boiling pressure. Total DP time is 15 min. The first 5 min with DP condition: 1 min for each cycle which includes 55 s vacuuming (fast pressure decreasing ∼10 s and low pressure maintaining -45 s) and 5 s vacuum breaking (pressure back to 1 atm and at 1 atm). Then the second 10 min with DP condition: 0.5 min for each cycle which includes 25 s vacuuming (fast pressure decreasing ∼10 s and low pressure maintaining ∼15 s) and 5 s vacuum breaking (pressure back to 1 atm and at 1 atm). Followed by cooking process, which is similar as control cooking process in Philips X6.

Results shows that DP treatment with pressure lower than boiling pressure can significantly increase stickiness (being indicative of starch gelatinization) of cooked brown rice. The increase in stickiness improves the sensory attributes of cooked brown rice.

### Embodiment 2: to improve white rice hydration

In order to evaluate the application of this invention in white rice hydration, weight increase after DP treatment is determined. Fig. 10 schematically shows the hydration improvement of white rice after DP soaking according to one embodiment of the present invention as compared with non-DP soaking in the prior art. So Fig. 10 show the experimental results of hydration in the condition of: *T*₁ at 30°C, *t*₁ at 10 min.
Control-1: only soaking without DP treatment
Control-2: soaking with DP treatment, but vacuum level at 20∼25kPa which is higher than boiling pressure. 1 min for each cycle which includes 55 s vacuuming (fast pressure decreasing ∼10 s and low pressure maintaining -45 s) and 5 s vacuum breaking (pressure back to 1 atm and at 1 atm)

This invention: soaking with DP treatment, vacuum level at 6∼7 kPa. Other condition is similar as control-2.

Results show that DP treatment with pressure lower than boiling pressure can significantly increase white rice hydration effect.

### Embodiment 3: to improve black bean hydration

In order to evaluate the application of this invention in black bean hydration, weight increase after DP treatment is determined. Fig. 11 schematically shows the hydration improvement of black bean after DP soaking according to one embodiment of the present invention as compared with non-DP soaking in the prior art under three experimental groups made based on different treatment time periods. So Fig. 11 show the experimental results of hydration in the condition of: *T*₁ at 30°C, *t*₁ at 5 min, 10 min, and 15 min, respectively.

### Control: only soaking without DP treatment

This invention: soaking with DP treatment, vacuum level at 6∼7 kPa, which is lower than boiling pressure. 1 min for each cycle which includes 55 s vacuuming (fast pressure decreasing ∼10 s and low pressure maintaining -45 s) and 5 s vacuum breaking (pressure back to 1 atm and at 1 atm)

Results shows that DP treatment can significantly increase black bean hydration effect.

In one embodiment of the present invention, a computer readable storage medium is also provided in the present invention which can have computer readable program instructions embodied therewith for, when executed on the control unit 208 of any of the cooking appliance 200 aforementioned, causing the control unit 208 to implement the method 100 of any of the embodiments described previously.

In one embodiment of the present invention, a computer program product is also provided in the present invention which can comprise a computer readable storage medium having computer readable program instructions embodied therewith for, when executed on the control unit 208 of any of the cooking appliance 200 aforementioned, causing the control unit 208 to implement the method 100 of any of the embodiments described previously.

As compared with the prior arts, the present invention has overcome the technical problem(s) mentioned in the background of the invention, and has the following technical benefits and characteristics:

### 1. Quick hydration rate in the proposed cooking process

In this invention, low pressure will cause the air bubbles to release from rice, and pressure release will increase water absorption extent due to pressure-pushing the water to replace (air bubble) spaces and enter into rice granule. Low pressure dynamic treatment will add the kinetic effect to faster release the air from the food to be replaced by water.

Lower pressure has better effect, and the pressure used in this invention is much lower than existing products and cooking process.

### 2. Even heating that is important for cooked rice texture qualities

In this invention, DP is used to remove air and replace with water to increase heating evenness during cooking process, what's more, the applied vacuum level is lower than boiling pressure to generate agitating effect for an additional even heating.

### 3. Being non-harmful for vacuum pump

In this invention, the moisture trapper can separate and trap water from removed air, therefore, it is not harmful for vacuuming, and contributes to device service life.

### 4. Balanced of rice-water ratio

In this invention, the moisture trapper can separate and trap water from removed air, and then, the trapped water will be send back to cooking chamber to maintain the rice to water ratio. Therefore, quality of cooked rice can be guaranteed.

In a word, the present invention provides a method and an appliance for cooking grain foods for improving cooking process.

Dynamic pressure is applied to speed up the process of hydrating before starch gelatinizing, the benefits of this invention is to shorten the normal cooking time while providing better texture attributes of cooked foods.

This invention can be incorporated into kitchen appliance products, such as rice cooker, (electric) pressure cooker, multi-cooker, and etc.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A method (100) for cooking grain foods, comprising:
heating (102) up the mixture of the grain foods and water to a first target temperature (T1) which is lower than a starch gelatinization temperature of the grain foods;
maintaining (104) the mixture of the grain foods and water to the first target temperature (T1) for a first determined time period (t1) while implementing (105) one or multiple cycles of dynamic pressure treatment to the mixture of the grain foods and water for a second determined time period (t2) which is no greater than the first determined time period (t1);
heating (106) up the mixture of the grain foods and water to a second target temperature (T2) indicative of the starch gelatinization temperature and maintaining (108) it to the second target temperature (T2) for a third determined time period (t3) for starch gelatinization of the grain foods; and
cooling (110) down the starch gelatinized grain foods to a third target temperature (T3) for acceptable serving;
wherein the dynamic pressure treatment comprises lowering down the pressure (P1) of the space in which the mixture of the grain foods and water accommodates to a level that is lower than the corresponding pressure level of water boiling pressure (P0) for the first target temperature (T1).

2. The method (100) according to claim 1, wherein time (t21) for each cycle of dynamic pressure treatment within the second determined time period (t2) ranges from 10 to 60s.

3. The method (100) according to claim 1 or 2, wherein for each cycle of dynamic pressure treatment, besides the lowering down of the pressure (P1) of the accommodating space as vacuuming, it further comprises vacuum degree maintaining, pressure recovering in 1 to 5s and ambient pressure maintaining orderly.

4. The method (100) according to claim 3, wherein the first determined time period (t1) is divided into at least two determined time segments;
in one determined time segment, at least one of the following item is distinguished from the one in other determined time segment:
the time for lowering down the pressure (P1) of the accommodating space;
the time for maintaining the reached vacuum degree in the accommodating space;
the time for recovering the pressure (P1) of the accommodating space back to the ambient pressure; and
the time for maintaining the ambient pressure in the accommodating space.

5. The method (100) according to claim 1, wherein the first target temperature (T1) ranges from 30 to 75 °C depending on different grain foods.

6. The method (100) according to claim 1, wherein the second target temperature (T2) ranges from 95 to 100 °C depending on different grain foods.

7. The method (100) according to claim 1, wherein the third target temperature (T3) ranges from 40 to 60 °C.

8. The method (100) according to claim 1 or 7, wherein the method (100) further comprises lowering (112) down the pressure (P1) of the accommodating space concurrently while cooling (110) down the starch gelatinized grain foods to the third target temperature (T3).

9. The method (100) according to claim 8, wherein the manners of cooling (110) down the starch gelatinized grain foods comprise natural cooling and vacuuming cooling.

10. A cooking appliance (200) for cooking grain foods, comprising:
a sealable cooking chamber (202), for accommodating the mixture of the grain foods and water therein;
a heater (204), coupled to the sealable cooking chamber (202), for heating up and maintaining the mixture of the grain foods and water to a first target temperature (T1) which is lower than a starch gelatinization temperature of the grain foods and to a second target temperature (T2) which is indicative of the starch gelatinization temperature of the grain foods respectively;
a vacuum pump (206), coupled to the sealable cooking chamber (202), for implementing one or multiple cycles of dynamic pressure treatment to the mixture of the grain foods and water; and
a control unit (208), coupled to the sealable cooking chamber (202), the heater (204) and the vacuum pump (206), for controlling the heater (204) and the vacuum pump (206) to create necessary cooking temperatures and cooking pressures duly within the sealable cooking chamber (202);
wherein the control unit (208) is configured to implement the dynamic pressure treatment during which comprises controlling the vacuum pump (206) to lower down the pressure (P1) within the sealable cooking chamber (202) to a level that is lower than the corresponding pressure level of water boiling pressure (P0) for the first target temperature (T1).

11. The cooking appliance (200) according to claim 10, wherein the cooking appliance (200) further comprises a moisture trapper (210), coupled to the sealable cooking chamber (202) and the vacuum pump (206), for trapping the gaseous phase of water evaporated from the liquid phase of water accommodated in the sealable cooking chamber (202) because of being heated before reaching the vacuum pump (206) and condensing the gaseous phase of water back to the liquid phase of water which is collected in a collector unit 1°C ated at the bottom of the moisture trapper (210).

12. The cooking appliance (200) according to claim 10, wherein the collector unit is connected to the sealable cooking chamber (202) and guiding the water collected back to the sealable cooking chamber (202) in real time.

13. The cooking appliance (200) according to claim 10, wherein the cooking appliance (200) is a rice cooker, electric pressure cooker or multi-cooker.

14. A computer readable storage medium, having computer readable program instructions embodied therewith for, when executed on the control unit (208) of the cooking appliance (200) of any of claims 10 to 13, causing the control unit (208) to implement the method (100) of any of claims 1 to 9.

15. A computer program product, comprising a computer readable storage medium having computer readable program instructions embodied therewith for, when executed on the control unit (208) of the cooking appliance (200) of any of claims 10 to 13, causing the control unit (208) to implement the method (100) of any of claims 1 to 9.
